# EUROPEAN PATENT SPECIFICATION

(11) **EP 3 392 548 B1**
(45) Date of publication and mention of the grant of the patent: **20.11.2019**
(21) Application number: 18168221.2
(22) Date of filing: 19.04.2018
(51) Int. Cl.: F21L 13/00, E04H 12/18, F16B 7/10, F21V 21/22, F21V 25/00, F21W 131/10

(54) **LIGHTING TOWER WITH SAFETY DEVICE**
BELEUCHTUNGSTURM MIT SICHERHEITSGERÄT
TOUR D'ÉCLAIRAGE AVEC UN DISPOSITIF DE SÉCURITÉ

(30) Priority: 21.04.2017 IT 201700044431
(43) Date of publication of application: 24.10.2018
(73) Proprietor: TRIME S.r.l., 20081 Cassinetta di Lugagnano (MI) (IT)
(72) Inventor: FONTANELLA, Andrea, 20081 Cassinetta di Lugagnano (MI) (IT); CREMASCHI, Luigi, 20081 Cassinetta di Lugagnano (MI) (IT)
(74) Representative: Zelioli, Giovanni

(56) References cited:
- US-B1- 9 598 875

## Description

### Technical Field

The present invention relates to a lighting tower comprising a safety device. In general, the invention relates to transportable lighting systems comprising telescopic poles.

### Prior art

Lighting apparatuses called "lighting towers" or "lighthouse towers" are known, which comprise telescopic poles installed on mobile bases typically comprising wheels or feet that allow lighting devices to be transported and positioned in an environment.

The telescopic poles of the lighting towers are openable and closable and allow raising the lighting devices at a height typically up to 10 meters, but occasionally even beyond this height. The lighting devices of the known lighting towers typically comprise LED, metallic iodide or halogen light sources, preferably adjustable.

The lighting towers may comprise an integrated electric generator or be configured for being connected to a generator, an external power source, a battery or power mains.

By means of the lighting towers it is thus possible to light up an area of interest of an environment. The lighting towers are used in particular in construction sites and workplaces, in areas difficult to access, for special events such as concerts or outdoor events, in the case of night-time emergency interventions, in the mining industry and in the "Oil & Gas" field and for military applications.

Important features for the lighting towers are compactness and handiness, for a better portability and maneuverability. A further important feature for the lighting towers is reliability in operation.

In known lighting towers, the telescopic pole is raised by a raising system, comprising steel ropes and pulleys operated by a winch. Said winch can be of the manual type, operated by an operator; in this way, the apparatus is more compact and lighter compared to solutions with hydraulic raising systems or also to the motorized ones.

The raising system of the lighting tower is dimensioned to largely withstand the forces that stress the elements of the telescopic pole during raising.

However, it may happen that, due to accidental reasons or wear, especially in case of inadequate maintenance, the rope and pulley system malfunctions, for instance due to the breaking of a rope. In this case, there may be a sudden collapse of the telescopic pole that supports the lighting devices, which have quite a considerable weight.

Therefore, the risk of a sudden collapse of the telescopic pole on itself involves a danger, in particular for possible operators below it, for instance while they are manually actuating the winch or operating the lighting tower.

Document US9598875 (B1) relates to a safety latch telescoping mast system for a portable light tower with a light assembly for attachment to the uppermost end of a telescoping mast member, which includes a pivotable spring loaded safety latch assembly positioned to remain in a first, cocked, position wherein an idler roller is in rotational engagement with a hoisting cable and the latch is outside the opening in the stationary mast member when the first hoisting cable is under tension, which trips to a second, position wherein the latch passes through the opening in the stationary mast member and engages into a slot in the first telescoping mast member when the tension on the first hoisting cable is relieved.

### Summary of the invention

An object of the present invention is to solve some drawbacks of the prior art.

A particular object of the present invention is to provide a lighting tower comprising a telescopic pole, which is safer during use.

A further particular object of the present invention is to provide a lighting tower able to overcome malfunctions of the raising system of the telescopic pole.

A further particular object of the present invention is to provide a lighting tower that avoids a sudden collapse of the telescopic pole supporting the lighting devices, in particular in case of breaking of a rope of the raising system.

A further particular object of the present invention is to provide a lighting tower having a handy and robust structure suitable for being transported and for efficiently operating under the various conditions of use and for a long time.

These and other objects are attained by a lighting tower comprising a safety device according to the enclosed claims which form an integral part of the present disclosure.

A solution idea underlying the present invention is to provide a lighting tower comprising: a telescopic pole with a first pole element and at least one second pole element telescopically associated with each other; at least one lighting device on a top of the pole; a raising system comprising at least one rope configured for being tensioned and for stretching the pole by unthreading the first pole element and the second pole element respectively, with a telescopic movement. The lighting tower further comprises a safety device that comprises: a rest element configured for contacting with the rope and for being maintained in a first position by a tension of the rope; at least one engage element connected to the rest element and configured for moving to a second position when the tension of the rope slackens. The engage element is configured for engaging, in the second position, in at least one first slot of the first pole element and with at least one second slot of the second pole element, so as to block the telescopic movement between the first pole element and the second pole element.

The safety device further comprises reinstating means configured for moving the at least one engage element in the second position, the reinstating means opposing to a maintaining action of the tension of the rope on the rest element.

The reinstating means comprise at least one spring inserted inside a support of the at least one engage element, wherein the spring is configured for being subjected to compression in the first position, and is further configured for extending and moving the at least one engage element in the second position.

In this way, the telescopic pole is provided with a safety device that allows blocking the telescopic movement between the first pole element and the second pole element, when the rope of the raising system loses tension, due for instance to a break.

Therefore, in case of the raising system malfunctions involving a loss of tension on the rope and a sudden at least partial collapse of the telescopic pole on itself, the above telescopic movement is blocked, and the total collapse and crash of the telescopic pole avoided.

In particular, in case of rope breakage, the safety device according to the present invention is effective in preventing the sudden collapse of the telescopic pole that supports the lighting device, thus protecting the safety of possible operators close to the base of the telescopic pole.

The structure of the safety device, comprising a rest element and an engage element, allows providing a lighting tower that is manageable and robust at the same time, thus improving safety without excessive increases in constructive complexity or the presence of complex electronic systems.

Further features and advantages will become more apparent from the following detailed description of a preferred, but not exclusive, embodiment of the present invention, and from the dependent claims that outline preferred and particularly advantageous embodiments of the invention.

### Brief description of the drawings

The invention is shown with reference to the following figures, provided by way of non-limiting example, in which:
- Figure 1 shows an embodiment of a lighting tower according to the present invention, in a closed configuration.
- Figure 2 shows the lighting tower of Figure 1, in a raised configuration.
- Figure 3 shows an embodiment of a safety device according to the present invention.
- Figure 4 shows two side views (a) and (b) of the device of Figure 3, in two different operating configurations.
- Figure 5 shows a section of the device of Figure 3.
- Figure 6 illustrates the operation of a safety device applied to a telescopic pole of the lighting tower according to the present invention, showing a first mode.
- Figure 7 illustrates the operation of a safety device applied to a telescopic pole of the lighting tower according to the present invention, showing a second mode.

In different figures, analogous elements will be indicated with analogous reference numbers.

### Detailed description

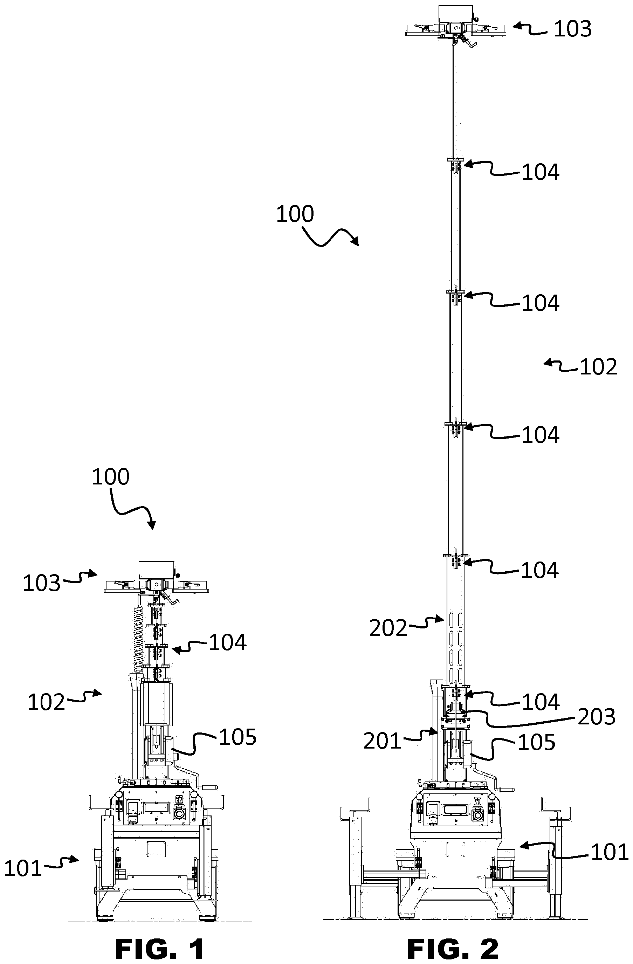

Figure 1 illustrates a non-limiting embodiment of a lighting tower 100 according to the present invention, in a closed configuration.

The lighting tower 100 comprises a base 101, a telescopic pole 102 supported by the base 101, and a lighting device 103 on top of the pole. The lighting device 103 comprises one or more light sources, in particular of the LED, metallic iodide or halogen type, preferably orientable.

The lighting tower 100 further comprises a raising system comprising a plurality of cascade ropes and pulleys 104, and means for tensioning the ropes, in particular a winch 105. The ropes are typically made of steel and the pulleys are dimensioned to support, unless malfunctions, the stresses of the pole elements. In possible variants, the manual winch 105 could be replaced with analogous devices, such as electric winches or hydraulic systems.

Figure 2 shows the lighting tower 100 in a raised configuration. In order to reach said raised configuration, an operator acts manually on the winch 105 and tensions the ropes associated with the pulleys 104 internal to the telescopic pole 102, causing the mutual unthreading of the pole elements according to a telescopic movement. In this way, the pole 102 is stretched and raises the lighting device 103 at the desired height.

Precisely the raising of the lighting device 103 is a critical phase due to the stresses acting on the raising system and to the presence of at least one operator close to the base 101 of the lighting tower.

In a raised configuration, the base 101 is preferably supported by adjustable stabilizers that are stretched by the body of the base. In general, the base 101 may comprise auxiliary systems for the transport, such as housings for raising forks, raising hooks and wheels. Furthermore, the base 101 preferably houses power means for allowing the lighting device 103 to be switched on; said power means may comprise generators, batteries, electrical connections to external sources or electrical networks, etc. The electric connection between the base 101 and the lighting device 103 preferably comprises a helical-shaped electric cable, visible in Figure 1 but omitted for the sake of clarity in Figure 2. The base 101 further integrates all of the appropriate services and devices, useful for the operation of the pole and which the skilled person is aware of.

The telescopic pole 102 in particular comprises, in the lowest portion, a first pole element 201 and a second pole element 202 telescopically associated with each other.

In particular, the first pole element 201 is more external and the second pole element is more internal, and they are preferably contiguous to each other in the series of telescopically associated pole elements. The first pole element 201 is preferably constrained to the base 101.

In order to improve the intelligibility of the embodiment, in Figure 2 a protective cover associated with the first pole element is omitted, showing the safety device 203.

The safety device 203, being preferably associated with a rope of the raising system, allows blocking the telescopic movement between the first pole element 201 and the second pole element 201 according to the modalities that will be described hereinafter.

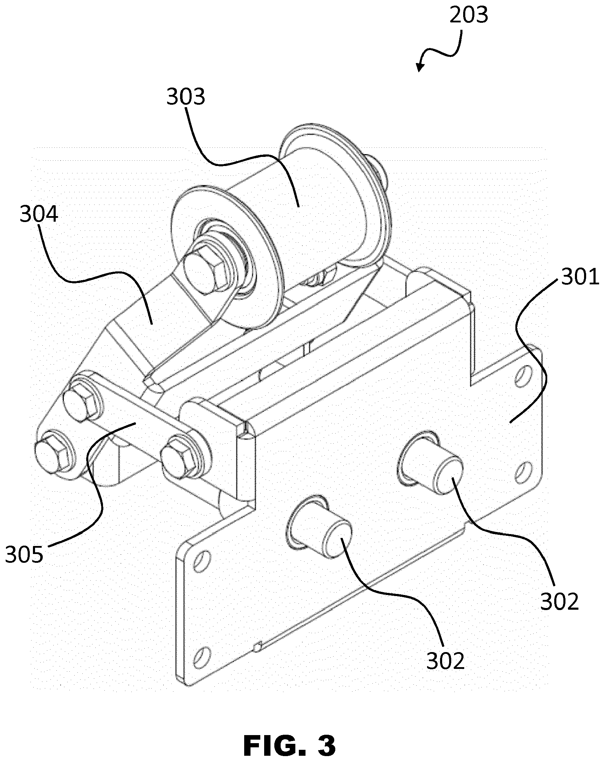

Figure 3 shows a preferred embodiment of a safety device 203 according to the present invention.

The safety device 203 comprises a plate 301 that is fixable to a pole element, in particular fixed to the first pole element 201, for instance by means of threaded connections or welding.

The plate 301 houses an engage element 302 that is configured for engaging in slots of the pole elements, and for blocking the telescopic movement thereof.

The engage element 302, according to a preferred embodiment, comprises a pair of pins 302. The pins 302 are preferably aligned to each other in a horizontal direction. As it will become clearer hereinafter, the engage element 302 is configured for engaging in respective slots of the pole elements and for constraining the telescopic movement thereof.

In particular, the pins 302 are parallel to each other, in the pair of pins. Furthermore, the pair of pins 302 is arranged perpendicularly to a longitudinal axis of the telescopic pole 102.

The presence of a pair of pins 302 helps improving the distribution of forces acting on the pole elements, with greater symmetry, even in connection to the presence of reinstating means that will be further described. In this way, it is possible to further increase the safety provided by the safety device 203.

Other embodiments of the engage element 302 could provide a unique pin or an elongated element, for instance with a rectangular, a chamfered rectangular or a substantially elliptical section, which engages in a respective hole or slot.

The safety device 203 further comprises a rest element 303 that is configured for contacting with a rope of the raising system.

In the preferred embodiment, the rest element 303 comprises a wheel that is particularly suitable for contacting with the rope, supporting the rubbing thereof during tensioning. The wheel can be fixed or, preferably, rotating. In the case of fixed wheel, a suitable material can be adopted, for instance steel or Teflon. In other variants, the rest element could have a different shape, for instance arched convex, in any case adapted to contact with the rope of the raising system.

In the preferred embodiment, the safety device 203 comprises a lever 304 having fulcrum on a support 305 connected to the plate 301. In this sense, the lever 304 has fulcrum directly on the first pole element 201, providing a first-type-lever with respect to the forces transmitted by the rest element 303 and by the engage element 302, as it will be further described. This embodiment is particularly advantageous for optimally managing the forces involved, in view of a global compactness and reliability of operation of the safety device 203.

In other embodiments, a generic connection element (lever 304 or other) could be adopted, which mechanically connects the rest element to the engage element, constraining a mutual movement thereof in a kinematic manner, between a first position and a second position.

For instance, in an alternative embodiment (not shown) it could be sufficient to provide a sleeve connecting the rest element to the engage element, constraining a mutual movement thereof. In other alternative embodiments (not shown) several connection elements, even more complex, could be provided, which provide linkage, gears and even mechanical, pneumatic, hydraulic or electric actuators.

In general, the engage element is provided to be configured for being moved as a result of a variation of tension on the rope, which changes the position of the rest element, as it will become apparent from the following description.

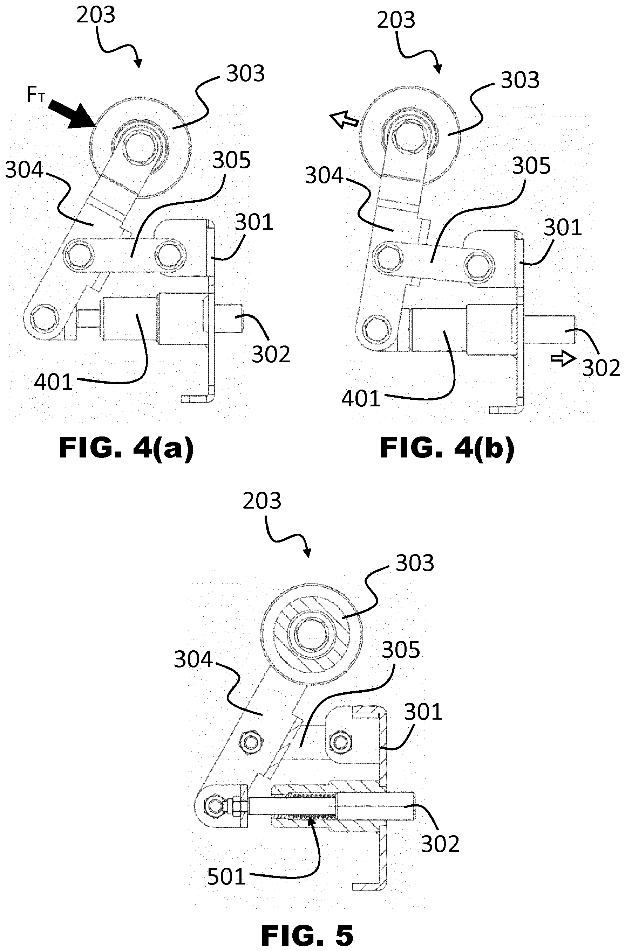

Figure 4(a) shows a side view of the safety device 203, in a first operating configuration, a working configuration.

In said working configuration, on the rest element 303 a force resulting from the F_{T} load caused by the tensioned rope acts, and therefore also applied to the lever 304 arm. In said working configuration, the engage element 302 stressed by the lever 304 is retracted, at least partially, inside the support 401, thus being in a position "more towards the left" in the view of the figure.

Figure 4(b) shows a further side view of the safety device 203, in a second operating configuration, a safety or blocking configuration.

In said safety configuration, on the rest element 303 the force applied by the tensioned rope slackens, so that by means of the lever 304 arm the engage element 302 as well is no longer loaded. In said safety configuration, the rest element 303 is free to move towards the outside of the pole, in the direction indicated by the white arrow, whereas the engage element 302 is moved to a more exposed position with respect to the support 401, thus being in a more internal position to the pole, namely "more towards the right" in the view of the figure, in the direction indicated by the second white arrow.

Figure 5 shows a section of the safety device 203, wherein it is possible to notice the presence of a spring 501, preferably inside the support 401 of the engage element.

The spring 501 allows exerting a reinstating force that tends to bring the engage element 302 into the position according to the blocking or safety configuration. In particular, in the preferred embodiment, the spring 501 is inserted inside the support 401 and subjected to compression in the position according to the working configuration. Therefore, the spring 501 tends to extend, to move the engage element 302 into the second blocking position, thus opposing the action of the load F_{T} caused by the tensioned rope on the rest element 303.

Preferably, the safety device 203 comprises a pair of springs 501, which are respectively inserted in a pair of supports 401 that are axially associated with the pair of pins 302.

As visible, the springs 501 are helical springs, each disposed so as to surround a respective pin 302 of the pair of pins.

In this way, the action of the opposing force provided by the springs 501 is able to more effectively oppose the action of the load F_{T} caused by the tensioned rope on the rest element 303.

Furthermore, thanks to the configuration of the springs 501, the activation of the safety device 203 is more reliable, with a better distribution of the forces involved; in this way, the springs 501 extend to move the engage element 302 into the blocking position, in a safer and more effective manner.

In a possible variant (not shown) instead of the spring 501 different reinstating means could be provided, which are configured for assisting the movement of the engage element 302 in the blocking position. For instance, a torsion spring could be provided around the fulcrum of the lever 304, or different resilient elements. An embodiment could also be conceived, wherein the reinstating means were absent, thus leaving the movement of the engage element 302 to the sole kinematic or using a generic weight force.

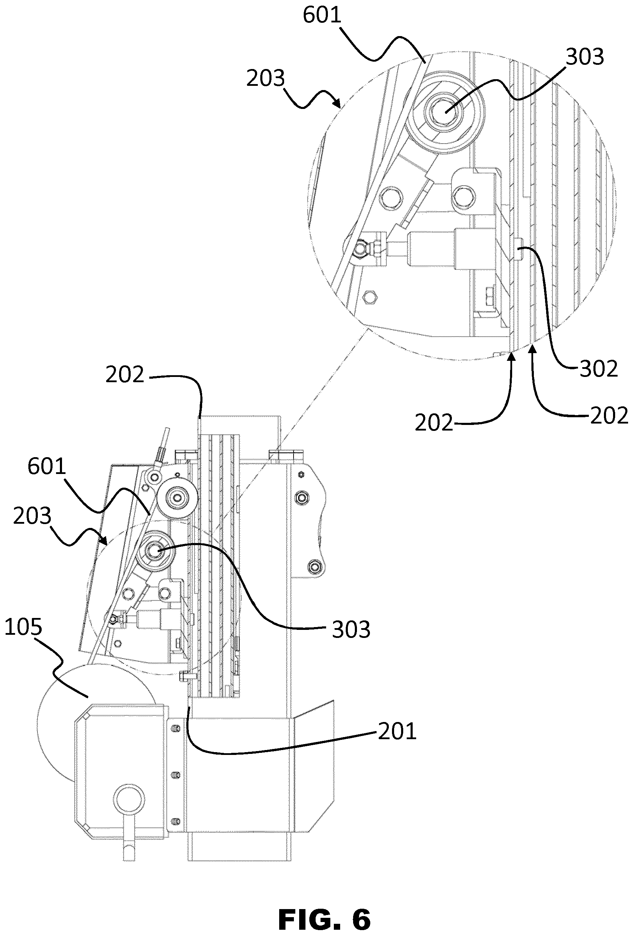

Figure 6 illustrates the operation of the safety device 203 applied to the telescopic pole 102 of the lighting tower 100, showing a first mode in the working configuration.

The rest element 303 is configured for contacting with the rope 601, connected to the winch 105. In particular, the rope 601 is external to the first pole element 201 and the rest element 302 is interposed between the rope 601 and the pole element 201. The rope 601 advantageously defines an angle with respect to the vertical of the first pole element 201; in this way, it is possible to house a functional and compact safety device 203, making the most of the displacement of the winch 105 that involves the aforementioned angle.

The rest element 303, by contacting with the rope 601, is maintained in a first position that is more retracted by the tension of the rope 601.

The engage element 302, in this first position, is also more retracted and engages, preferably, only partially a first slot formed on the first pole element 201, as it is possible to notice in the enlarged view.

Therefore, in this first position the first pole element 201, preferably more external, and the second pole element 202, preferably more internal, are free to telescopically slide with each other, thus allowing raising or lowering the pole.

Until the tension on the rope 601 lasts, the above described working configuration is stably maintained. Obviously, this occurs both during the stretching of the pole and during the steady maintenance of height and during the lowering of the pole, wherein the rope 601 is anyway tensioned.

However, when the tension on the rope 601 slackens, in particular due to a malfunction or breaking, the following occurs.

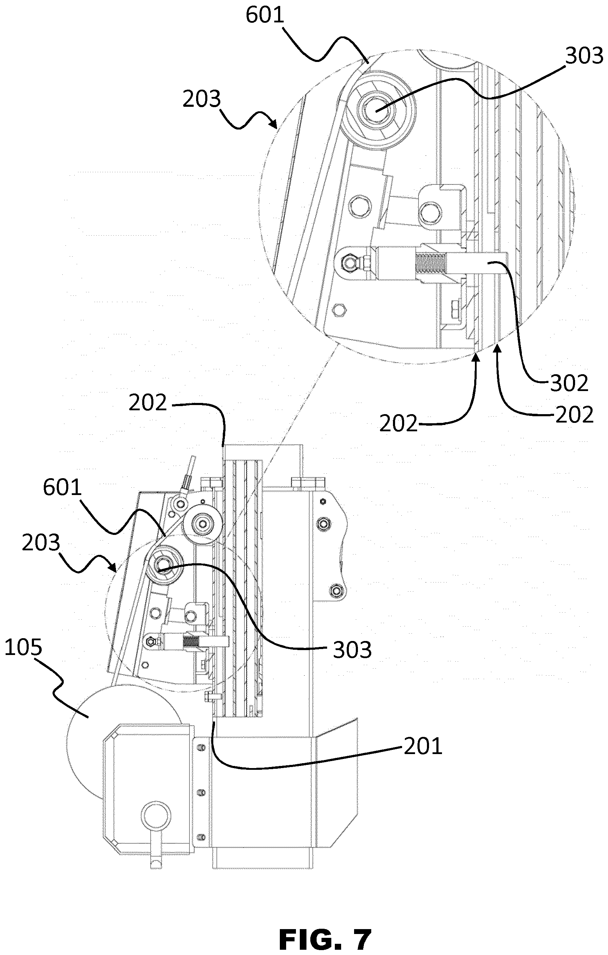

Figure 7 illustrates the operation of the safety device 203 applied to the telescopic pole 102 of the lighting tower 101, showing a second mode in the safety or blocking configuration.

In the safety position, the rest element 303 is in contact with the rope 601, which however is devoid of the sufficient tension to maintain it in the first position; therefore, the rope 601 deforms and allows the movement towards the outside of the rest element 303. This case is, for instance, illustrative of a breaking occurred in the first rope 601, which would cause the second pole element 202 to fall into the first pole element 201.

Exploiting as well the reinstating means already described, the kinematic of the safety device 203 is then moved to a second position, where the rest element 303 goes to a more external second position. The engage element 302, in this second position, is moved into an interference position where it engages in the first slot formed on the first pole element 201 and also in a second slot of the second pole element 202, as it is possible to notice in the enlarged view.

The slot of the first pole element 201 is preferably circular-shaped. The slot or slots of the second pole element preferably have an elongated shape, having in particular a constant width and being vertically aligned, so as to allow the initial raising of the second pole element, when there is a tension variation on the rope 601.

Therefore, in this second position the first pole element 201 and the second pole element 202 are blocked and the telescopic sliding of the pole 102 is not allowed. In this way, the lighting device 103 cannot completely collapse until it reaches the situation represented in Figure 1, but stops at an upper intermediate height, where it represents a minor risk for any operators close to the lighting tower 100.

In this way, in case of breaking of the rope 601 or in general of a sudden drop in tension on the rope 601, the complete lowering of the second pole element 202 and a complete collapse of the telescopic pole 102 are avoided.

In the preferred embodiment, as shown from the image of Figure 2, the second pole element 202 comprises a plurality of second slots, which are aligned and at different heights (height on the pole) with each other. In this way, it becomes possible to engage the engage element 302 in any respective slot that becomes available during the sudden lowering of the second pole element. Therefore, it becomes possible to define a plurality of blocking positions of the second pole element 202, making the safety device 203 intervene as quickly as possible, thus blocking the relative telescopic movement of the pole elements 201 and 202 as soon as the collapse occurs. Therefore, the use of a plurality of second slots on the second pole element helps increasing the safety, thus allowing the block of the telescopic movement even for intermediate stretching of the telescopic pole.

The present description relates to an exemplifying case wherein the safety device is applied to the first pole element, by interacting with the first rope and blocking the telescopic movement of the second pole element. This situation is the most interesting one for the lighting towers, since it is the first rope the most stressed one and therefore the most exposed one to breaking risks. Furthermore, a possible even higher breaking of a rope of pole elements would involve an only partial collapse of the telescopic pole, having less danger for the operators below.

Nevertheless, the skilled person may also apply the present invention to pole elements different from the first and the second ones (in a strictly algebraic sense), or to more combinations of pole elements if the sizes and dimensions allow inserting a safety device between a generic "first" and a "second" pole element (in a connotative and not strictly algebraic sense).

Considering the description herein reported, the skilled person will be therefore able to conceive further changes and variants, in order to meet contingent and specific needs. The embodiments herein described are therefore to be intended as non-limiting examples of the invention.

## Claims

1. Lighting tower (100) comprising:
a telescopic pole (102) comprising a first pole element (201) and at least one second pole element (202), telescopically associated with each other;
at least one lighting device (103) on a top of said pole (102);
a raising system comprising at least one rope (601) configured for being tensioned and for stretching said pole (102) by unthreading said first pole element (201) with respect to said second pole element (202) with a telescopic movement;
wherein said lighting tower (100) further comprises a safety device (203) comprising:
- a rest element (303) configured for contacting with said at least one rope (601) and for being maintained in a first position by a tension of said rope (601);
- at least one engage element (302) connected to said rest element (303) and configured for moving to a second position when said tension of said rope (601) slackens;
wherein said at least one engage element (302) is further configured for engaging, in said second position, in at least one first slot of said first pole element (201) and in at least one second slot of said second pole element (202), so as to block said telescopic movement between said first pole element (201) and said second pole element (202),
wherein said safety device (203) further comprises reinstating means (501) configured for moving said at least one engage element (302) in said second position, said reinstating means (501) opposing to a maintaining action of said tension of said rope (601) on said rest element (303),
wherein said reinstating means (501) comprise at least one spring (501) configured for being subjected to compression in said first position, and further configured for extending and moving said at least one engage element (302) in said second position,
**characterized in that** said at least one spring (501) is inserted inside a support (401) of said at least one engage element (302).

2. Lighting tower (100) according to claim 1, further comprising a connection element (304) which mechanically connects said rest element (303) with said at least one engage element (302), constraining a mutual movement thereof between said first position and said second position.

3. Lighting tower (100) according to claim 2, wherein said connection element comprises a lever (304) having fulcrum on said first pole element (201), said lever (304) being preferably a first-type-lever with respect to forces transmitted by said rest element (303) and said engage element (302).

4. Lighting tower (100) according to any one of claims 1 to 3, wherein said at least one rope (601) is external to said first pole element (201), and wherein said rest element (303) is interposed between said rope (601) and said first pole element (201), said rope (601) preferably forming an angle with respect to the vertical of said first pole element (201) .

5. Lighting tower (100) according to any one of claims 1 to 4, wherein said at least one engage element comprises a pair of pins (302) parallel to each other, preferably aligned to each other in a horizontal direction.

6. Lighting tower (100) according to claim 5, wherein said pair of pins (302) is arranged perpendicularly to a longitudinal axis of said telescopic pole (102).

7. Lighting tower (100) according to claim 5 or 6, wherein said reinstating means comprise a pair of springs (501) respectively inserted in a pair of supports (401) which are axially associated with said pair of pins (302).

8. Lighting tower (100) according to claim 7, wherein each spring (501) of said pair of springs (501) is a helical spring arranged so as to surround a respective pin (302) of said pair of pins (302).

9. Lighting tower (100) according to any one of claims 6 to 8, wherein said pair of pins (302) is adapted, even in said first position, to at least partially engage in said at least one first slot of said first pole element (201).

10. Lighting tower (100) according to any one of claims 1 to 9, wherein said first pole element (201) comprises said at least one first slot and wherein said second pole element (202) comprises a plurality of said second slots aligned at different heights on said second pole element (202) to block said telescopic movement in a plurality of blocking positions.

11. Lighting tower (100) according to any one of claims 1 to 10, wherein said first pole element (201) is more external and said second pole element (202) is more internal and wherein said safety device (203) is mounted on said first pole element (201).

12. Lighting tower (100) according to any one of claims 1 to 11, further comprising a base (101), wherein said telescopic pole (102) is supported by said base (101), said first pole element (201) being constrained to said base (101).

13. Lighting tower (100) according to any one of claims 1 to 12, further comprising supply means for said lighting device (103), said lighting device (103) preferably comprising LED, metallic iodide or halogen light sources.

## Patentansprüche

1. Lichtturm (100), umfassend:
einen Teleskopmast (102), der ein erstes Stangenelement (201) und mindestens ein zweites Stangenelement (202) umfasst, die teleskopisch miteinander verbunden sind;
mindestens eine Leuchtvorrichtung (103) auf einer Oberseite des Masts (102);
ein Hubsystem, das mindestens ein Seil (601) umfasst und konfiguriert ist zum Spannen und Strecken des Masts (102) durch Ausfahren des ersten Stangenelements (201) in Bezug auf das zweite Stangenelement (202) mit einer Teleskopbewegung;
wobei der Lichtturm (100) ferner eine Sicherheitsvorrichtung (203), die umfasst:
- ein Ruheelement (303), das für einen Kontakt mit dem mindestens einen Seil (601) und zum Halten in einer ersten Position durch eine Spannung des Seils (601) konfiguriert ist;
- mindestens ein Eingriffselement (302), das mit dem Ruheelement (303) verbunden und zum Bewegen in eine zweite Position konfiguriert ist, wenn die Spannung des Seils (601) nachlässt;
wobei das mindestens eine Eingriffselement (302) ferner konfiguriert ist, in der zweiten Position in mindestens einen ersten Schlitz des ersten Stangenelements (201) und in mindestens einen zweiten Schlitz des zweiten Stangenelements (202) einzugreifen, um so die Teleskopbewegung zwischen dem ersten Stangenelement (201) und dem zweiten Stangenelement (202) zu blockieren,
wobei die Sicherheitsvorrichtung (203) ferner eine Wiederherstellungseinrichtung (501) umfasst, die konfiguriert ist, um das mindestens eine Eingriffselement (302) in der zweiten Position zu bewegen, wobei die Wiederherstellungseinrichtung (501) einer Aufrechterhaltung der Wirkung der Spannung des Seils (601) auf das Ruheelement (303) entgegenwirkt,
wobei die Wiederherstellungseinrichtung (501) mindestens eine Feder (501) umfasst, die konfiguriert ist, in der ersten Position einer Kompression ausgesetzt zu werden, und ferner konfiguriert ist, das mindestens eine Eingriffselement (302) in der zweiten Position zu verlängern und zu bewegen, **dadurch gekennzeichnet, dass** die mindestens eine Feder (501) innerhalb eines Trägers (401) des mindestens einen Eingriffselements (302) eingesetzt ist.

2. Lichtturm (100) nach Anspruch 1, ferner umfassend ein Verbindungselement (304), das das Ruheelement (303) mechanisch mit dem mindestens einen Eingriffselement (302) verbindet und das eine gegenseitige Bewegung desselben zwischen der ersten Position und der zweiten Position einschränkt.

3. Lichtturm (100) nach Anspruch 2, wobei das Verbindungselement einen Hebel (304) mit Drehpunkt auf dem ersten Stangenelement (201) umfasst, wobei der Hebel (304) vorzugsweise ein Hebel ersten Typs in Bezug auf die von dem Ruheelement (303) und dem Eingriffselement (302) übertragenen Kräfte ist.

4. Lichtturm (100) nach einem der Ansprüche 1 bis 3, wobei das mindestens eine Seil (601) außerhalb des ersten Stangenelements (201) liegt und wobei das Ruheelement (303) zwischen dem Seil (601) und dem ersten Stangenelement (201) angeordnet ist, wobei das Seil (601) vorzugsweise einen Winkel in Bezug auf die Vertikale des ersten Stangenelements (201) bildet.

5. Lichtturm (100) nach einem der Ansprüche 1 bis 4, wobei das mindestens eine Eingriffselement ein Paar Stifte (302) parallel zueinander, vorzugsweise in horizontaler Richtung zueinander ausgerichtet, umfasst.

6. Lichtturm (100) nach Anspruch 5, wobei das Paar Stifte (302) senkrecht zu einer Längsachse des Teleskopmastes (102) angeordnet ist.

7. Lichtturm (100) nach Anspruch 5 oder 6, wobei die Wiederherstellungseinrichtung ein Paar Federn (501) umfassen, die jeweils in ein Paar von Trägern (401) eingesetzt sind, die dem Paar Stifte (302) axial zugeordnet sind.

8. Lichtturm (100) nach Anspruch 7, wobei jede Feder (501) des Paars Federn (501) eine Schraubenfeder ist, die so angeordnet ist, dass sie einen jeweiligen Stift (302) des Paares Stifte (302) umgibt.

9. Lichtturm (100) nach einem der Ansprüche 6 bis 8, wobei das Paar Stifte (302) angepasst ist, auch in der ersten Position, zumindest teilweise in den mindestens einen ersten Schlitz des ersten Stangenelements (201) einzugreifen.

10. Lichtturm (100) nach einem der Ansprüche 1 bis 9, wobei das erste Stangenelement (201) den mindestens einen ersten Schlitz umfasst und wobei das zweite Stangenelement (202) eine Vielzahl der zweiten Schlitzen umfasst, die in unterschiedlichen Höhen an dem zweiten Stangenelement (202) ausgerichtet sind, um die Teleskopbewegung in einer Vielzahl von Blockierpositionen zu blockieren.

11. Lichtturm (100) nach einem der Ansprüche 1 bis 10, wobei das erste Stangenelement (201) mehr außen ist und das zweite Stangenelement (202) mehr innen ist und wobei die Sicherheitsvorrichtung (203) an dem ersten Stangenelement (201) montiert ist.

12. Lichtturm (100) nach einem der Ansprüche 1 bis 11, ferner umfassend eine Basis (101), wobei der Teleskopmast (102) von der Basis (101) getragen wird, wobei das erste Stangenelement (201) an die Basis (101) gebunden ist.

13. Lichtturm (100) nach einem der Ansprüche 1 bis 12, ferner umfassend Versorgungsmittel für die Leuchtvorrichtung (103), wobei die Leuchtvorrichtung (103) vorzugsweise LED-, Metalliodid- oder Halogenlichtquellen umfasst.

## Revendications

1. Tour d'éclairage (100) comprenant :
un mât télescopique (102) comprenant un premier élément de mât (201) et au moins un deuxième élément de mât (202), associés l'un à l'autre de façon télescopique ;
au moins un dispositif d'éclairage (103) sur un sommet du mât (102) ;
un système de levage comprenant au moins un câble (601) configuré pour être tendu et pour étirer le mât (102) en dégageant le premier élément de mât (201) par rapport au deuxième élément de mât (202) selon un mouvement télescopique ;
la tour d'éclairage (100) comprenant en outre un dispositif de sécurité (203) comprenant :
- un élément d'appui (303) configuré pour être en contact avec ledit au moins un câble (601) et pour être maintenu dans une première position par une tension du câble (601) ;
- au moins un élément d'engagement (302) relié à l'élément d'appui (303) et configuré pour se déplacer vers une deuxième position lorsque la tension du câble (601) se relâche ;
ledit au moins un élément d'engagement (302) étant en outre configuré pour s'engager, dans la deuxième position, dans au moins une première fente du premier élément de mât (201) et dans au moins une deuxième fente du deuxième élément de mât (202) de sorte à bloquer le mouvement télescopique entre le premier élément de mât (201) et le deuxième élément de mât (202),
le dispositif de sécurité (203) comprenant en outre des moyens de rétablissement (501) configurés pour déplacer ledit au moins un élément d'engagement (302) dans la deuxième position, les moyens de rétablissement (501) s'opposant à une action de maintien de la tension du câble (601) sur l'élément d'appui (303),
les moyens de rétablissement (501) comprenant au moins un ressort (501) configuré pour être soumis à une compression dans la première position, et configuré en outre pour étendre et déplacer ledit au moins un élément d'engagement (302) dans la deuxième position,
**caractérisée en ce que** ledit au moins un ressort (501) est inséré à l'intérieur d'un support (401) dudit au moins un élément d'engagement (302).

2. Tour d'éclairage (100) selon la revendication 1, comprenant en outre un élément de liaison (304) qui relie mécaniquement l'élément d'appui (303) audit au moins un élément d'engagement (302), imposant un mouvement mutuel de ceux-ci entre la première position et la deuxième position.

3. Tour d'éclairage (100) selon la revendication 2, dans laquelle l'élément de liaison comprend un levier (304) ayant un pivot sur le premier élément de mât (201), le levier (304) étant de préférence un levier de premier genre par rapport aux forces transmises par l'élément d'appui (303) et l'élément d'engagement (302).

4. Tour d'éclairage (100) selon l'une quelconque des revendications 1 à 3, dans laquelle ledit au moins un câble (601) est à l'extérieur du premier élément de mât (201), et l'élément d'appui (303) est interposé entre le câble (601) et le premier élément de mât (201), le câble (601) formant de préférence un angle par rapport à la verticale du premier élément de mât (201).

5. Tour d'éclairage (100) selon l'une quelconque des revendications 1 à 4, dans laquelle ledit au moins un élément d'engagement comprend une paire de broches (302) parallèles l'une à l'autre, de préférence alignées entre elles dans une direction horizontale.

6. Tour d'éclairage (100) selon la revendication 5, dans laquelle la paire de broches (302) est disposée perpendiculairement à un axe longitudinal du mât télescopique (102).

7. Tour d'éclairage (100) selon la revendication 5 ou 6, dans laquelle les moyens de rétablissement comprennent une paire de ressorts (501) respectivement insérés dans une paire de supports (401) qui sont associés axialement à la paire de broches (302).

8. Tour d'éclairage (100) selon la revendication 7, dans laquelle chaque ressort (501) de la paire de ressorts (501) est un ressort hélicoïdal disposé de sorte à entourer une broche respective (302) de la paire de broches (302).

9. Tour d'éclairage (100) selon l'une quelconque des revendications 6 à 8, dans laquelle la paire de broches (302) est apte, même dans la première position, à s'engager au moins partiellement dans ladite au moins une première fente du premier élément de mât (201).

10. Tour d'éclairage (100) selon l'une quelconque des revendications 1 à 9, dans laquelle le premier élément de mât (201) comprend ladite au moins une première fente et le deuxième élément de mât (202) comprend une pluralité desdites deuxièmes fentes alignées à différentes hauteurs sur le deuxième élément de mât (202) pour bloquer le mouvement télescopique dans une pluralité de positions de blocage.

11. Tour d'éclairage (100) selon l'une quelconque des revendications 1 à 10, dans laquelle le premier élément de mât (201) est situé plus à l'extérieur et le deuxième élément de mât (202) plus à l'intérieur, et le dispositif de sécurité (203) est monté sur le premier élément de mât (201).

12. Tour d'éclairage (100) selon l'une quelconque des revendications 1 à 11, comprenant en outre une base (101), le mât télescopique (102) étant supporté par la base (101), le premier élément de mât (201) étant assujetti à la base (101).

13. Tour d'éclairage (100) selon l'une quelconque des revendications 1 à 12, comprenant en outre des moyens d'alimentation pour le dispositif d'éclairage (103), ledit dispositif d'éclairage (103) comprenant de préférence des sources lumineuses DEL, à iodure métallique ou halogène.
